# EUROPÄISCHE PATENTANMELDUNG

(11) **EP 1 310 386 A2**
(43) Veröffentlichungstag der Anmeldung: **14.05.2003**
(21) Anmeldenummer: 02023180.9
(22) Anmeldetag: 16.10.2002
(51) Int. Cl.: B60C 23/04

(54) **Sende-und/oder Empfangseinrichtung zum Einbau in elastische Strukturen sowie Antennen hierfür**

(30) Priorität: 08.11.2001 DE 10154494
(71) Anmelder: Continental Aktiengesellschaft, 30165 Hannover (DE)
(72) Erfinder: Strache, Wolfgang, Dr., 30169 Hannover (DE); Behrends, Holger, 30179 Hannover (DE); Lehmann, Jörg, Dr., 30451 Hannover (DE); Becherer, Thomas, Dr., 30438 Burgwedel (DE); Rutter, George, J., Matthews, NC 28105 (US)

(57) **Zusammenfassung**

Sende- und/oder Empfangseinrichtung zum Einbau in elastische Strukturen, wobei die Sende- und Empfangseinrichtung aus einem oder mehreren Elektronikschaltkreisen (1) oder -elementen, besteht, gegebenenfalls mit zugeordneten Sensor- und oder Signalelementen, wobei die Sende- und/oder Empfangseinrichtung eine oder mehrere an den Elektronikschaltkreis angeschlossene Antennen (2,2') aufweist, wobei daß die Antenne aus einem oder mehreren Filamenten besteht, die in der Fläche oder im Raum so angeordnet sind, dass die Hauptrichtungen der innerhalb der sie umgebenden elastischen Struktur/Matrix auftretenden Spannungen und Kräfte die Filamentachsen im Wesentlichen schneiden oder kreuzen.

## Beschreibung

Die Erfindung betrifft eine Sende- und / oder Empfangseinrichtung zum Einbau in elastische Strukturen, vorzugsweise polymere Strukturen, insbesondere Transponder zum Einbau in Reifen, wobei die Sende- und Empfangseinrichtung aus einem oder mehreren Elektronikschaltkreisen oder -elementen, beispielweise zusammengefasst in einem Mikrochip besteht, gegebenenfalls mit zugeordneten Sensor- und oder Signalelementen, wobei die Sende- und / oder Empfangseinrichtung eine oder mehrere an den Elektronikschaltkreis angeschlossene Antennen aufweist.

Ebenfalls betrifft die Erfindung Antennen für eine solche Sende- und Empfangseinrichtung.

Solche Sende- und / oder Empfangseinrichtungen, also beispielsweise Transponder, bestehen in der Regel aus einem oder mehreren Elektronikbauteilen (Chip, ggf. mit integrierten Sensorelementen) sowie aus an das Elektronikbauteil angeschlossenen Antennen.

In einigen Fällen ist die gesamte Sende- und / oder Empfangseinrichtung zusätzlich in eine Kunststofffolie eingebettet, sodass ein flexibler, dünner Streifen entsteht, bei dem Elektronikbauteil und Antennen mit Folie umgeben sind.

Das Einbringen von Sende- und / oder Empfangseinrichtungen in elastische Strukturen, etwa polymere Strukturen wie z. B Fahrzeug-Luftreifen aus Gummi gestaltet sich schwierig. Solche Transpondereinheiten können z.B. in sie umschließende Gummikissen eingebettet werden und dann wie ein Flicken (Tag / Patch) auf die Innen- oder Außenseite eines fertigen, d.h. ausvulkanisierten Reifens geklebt werden. Die Klebung selbst ist nicht einfach - der Reifen muß gereinigt und angerauht werden - und läßt auch in Bezug auf ihre Dauerhaltbarkeit (Geschwindigkeit, Verformungen des Reifens im Betrieb) zu wünschen übrig. Bei Verformungen des Reifens können die Antennen zerstört oder vom Elektronikschaltkreis /-bauteil abgerissen werden.

Das Einvulkanisieren von solchen Sende- und / oder Empfangseinrichtung (Transpondereinheiten) in den Reifen ist ebenfalls mit Nachteilen versehen. Es besteht nämlich zum einen die Gefahr, dass bei der zur Herstellung von Reifen erforderlichen Bombierung und den zugehörigen starken Verformungen des Rohlings die Antennen zerstört oder vom Elektronikschaltkreis /-bauteil abgerissen werden.

Ebenso passiert es, dass nach der Fertigstellung des Reifens durch das direkte Einbinden der Transpondereinheit in die Gummimatrix bei den nachfolgenden Verformungen des Reifens im Betrieb die mechanische Belastung der Transpondereinheit zu groß wird und beispielsweise die Antennen abreißen.

Für die Erfindung bestand also die Aufgabe, eine Sende- und / oder Empfangseinrichtung zur Verfügung zu stellen, die sicher in den Reifen eingebracht werden kann, also nicht unbedingt als Patch aufgeklebt zu werden braucht, und mit der eine Zerstörung oder ein Abreißen von Antennen durch mechanische Belastungen aufgrund von Verformungen des Reifens bei der Herstellung oder im Betrieb vermieden wird.

Gelöst wird diese Aufgabe durch die Merkmale des Hauptanspruchs. Vorteilhafte Weiterbildungen sind in den Unteransprüchen offenbart. Ebenso werden Antennen offenbart, die in besonderer Weise zur Verwendung in der erfindungsgemäßen Sende- und / oder Empfangseinrichtung geeignet sind.

Hierbei besteht die Antenne aus einem oder mehreren elastisch und / oder plastisch verformbaren Filamenten, die in der Fläche oder im Raum so angeordnet sind, dass die Hauptrichtungen der innerhalb der sie umgebenden elastischen Struktur / Matrix auftretenden Spannungen und Kräfte die Filamentachsen im Wesentlichen schneiden oder kreuzen, d.h. also nicht parallel oder identisch mit den Filamentachsen sind. Dazu sind die Filamente im einfachsten Fall in Windungen, Schleifen, Bögen, Spiralen oder Schrauben gelegt.

Solche Antennenausbildungen sind unempfindlich gegenüber Biegewechselspannungen, wie sie beispielsweise bei in Reifen eingebauten Transpondern auftreten.

Vorteilhafterweise besteht die Antenne entweder aus eine Vielzahl miteinander verwobenen und / oder verflochtenen und elastisch oder plastisch verformbaren Filamenten, wobei die einzelnen Filamentfäden relativ zueinander beweglich / verschiebbar ausgebildet sind, oder aus getwisteten, geschlagenen oder miteinander verdrehten und elastisch oder plastisch verformbaren Filamenten, wobei die einzelnen Filamentfäden ebenfalls relativ zueinander bewegbar / verschiebbar ausgebildet sind.

Der Vorteil einer solchen Ausbildung besteht darin, dass die Antennen damit in ihren Abmessungen, beispielsweise in Längsrichtung, problemlos um bis zu 50% verändert werden können, indem sich die einzelnen sehr dünnen Filamente des so aufgebauten Geflechtes elastisch oder plastisch verbiegen und sich durch Änderung der Geflechtgeometrie / der Schlaglänge und Steigung gegeneinander verschieben können.

Andererseits wird durch die Verwebung und / oder Verflechtung der Filamente vermieden, dass ein einzelnes Filament zu tief in die umgebende Matrix eindringt und die Eigenschaften des Reifens beeinträchtigt.

Eine vorteilhafte und in ihrer Herstellung besonders einfache Ausbildung besteht darin, dass die Antenne aus einem schraubenförmig oder wendelförmig / spiralförmig gedrehten Filament besteht.

Eine weitere vorteilhafte Ausbildung besteht darin, dass die Filamente elektrisch leitend miteinander verbunden sind, vorzugsweise durch mechanischen Gleit-Kontakt. Hierdurch ergibt sich für die Antenne dieselbe Abstrahl- / Empfangscharakteristik, die bei einer nicht dehnbaren Flächenantenne vorhanden wäre. Dies wird noch dadurch verstärkt, wenn in einer weiteren vorteilhaften Ausbildung die Filamente aus einem metallischen Werkstoff bestehen, vorzugsweise als dünne Drähte oder Folien ausgebildet sind.

Auch wenn einzelne Filamente über die Lebensdauer des Reifens ausfallen sollten, bleibt die Einrichtung funktionstüchtig.

Eine weitere vorteilhafte Ausbildung besteht darin, dass die Filamente aus Messing bestehen oder mit einer äußeren Messingschicht versehen sind. Eine solche Ausbildung erhöht die Adhäsion der Filamente an die umgebende Matrix und fördert dadurch z.B. die sichere Einbindung von Transpondern mit Antennen innerhalb von Reifen.

Eine weitere vorteilhafte Ausbildung besteht darin, dass die Filamente aus einem leitfähigen Werkstoff bestehen, vorzugsweise als dünne Drähte oder Folien aus Kohlenstoff enthaltenden Materialien ausgebildet sind. Bei einer solchen Ausbildung ist es möglich, einen Antennenwerkstoff einzusetzen, der entweder dem umgebenden (Matrix-) Werkstoff möglichst ähnlich ist oder sogar diesem gleich ist und lediglich mit z.b. Kohlenstoff dotiert ist. Hierdurch erhalten Antennenwerkstoff und umgebender Werkstoff ähnliche oder gleiche Elastizitätsmoduli und sind damit sehr unempfindlich gegenüber einwirkenden mechanischen Belastungen.

Eine weitere vorteilhafte Ausbildung besteht darin, dass die Sende- und / oder Empfangseinrichtung eine oder mehrere an den Elektronikschaltkreis angeschlossene Antennen aufweist, die über einer Zugentlastung miteinander oder mit dem Elektronikschaltkreis verbunden sind. Durch eine solche Zugentlastung, etwa eine mechanisch feste Brücke, kann das Abreißen der Antennen vom Elektronikschaltkreis verhindert werden.

Eine in besonders vorteilhafter Weise zur Verwendung in der erfindungsgemäßen Sendeund / oder Empfangseinrichtung geeignete Antennenform ergibt sich dadurch, dass die Antenne in Form eines flachen Bandes ausgebildet ist, welches aus miteinander verwobenen und / oder verflochtenen Filamenten besteht. Ein solches Antennenband stellt insbesondere in Längsrichtung eine sehr große Verformungsfähigkeit bereit, die bis zu 50% der ursprünglichen Länge betragen kann.

In ähnlicher Weise vorteilhaft geeignete Antennenformen ergibt sich dadurch, dass entweder die Antenne in Form eines Schlauches ausgebildet ist, wobei die Wände des Schlauches aus miteinander verwobenen und / oder verflochtenen Filamenten bestehen, oder dass die Antenne in Form eines Verstärkungscords für Reifen ausgebildet ist.

Die erfindungsgemäße Antenne kann als Dipol oder als umlaufendes Band ausgebildet sein, dessen Enden mit dem Elektronikschaltkreis verbunden sind und somit einen geschlossenen Ring bilden. Ein umlaufendes Band ist in Bezug auf die Empfangsrichtung weniger eingeschränkt und kann die Signalstärke verbessern, insbesondere wenn seine Länge die Hälfte oder ein Viertel der Wellenlänge der Übertragungsfrequenz beträgt. Zusätzlich wird die Möglichkeit ausgeräumt, dass die Antennenenden bei starker Reifenbeanspruchung in das Reifenmaterial eindringen und dieses beschädigen.

Eine erfindungsgemäße Anordnung kann sowohl zwischen der Karkasse und der Seitenwand des Reifens als auch zwischen Innenseele und Karkasse eingebettet werden.

Anhand eines Ausführungsbeispieles soll die Erfindung näher erläutert werden.

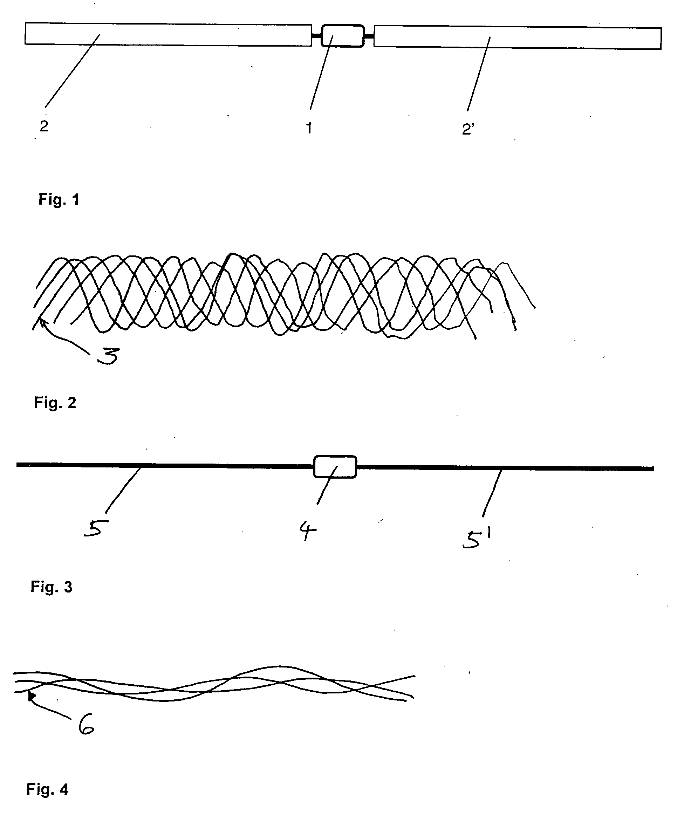

Die Fig. 1 zeigt einen als Mikrochip ausgebildeten Elektronikschaltkreisen 1, an den zwei streifenförmige und in Form eines flachen Bandes ausgebildete Antennen 2 und 2' angeschlossen sind und der mit diesen eine als Transponder in einem Reifen ausgeführte Sende- und Empfangseinrichtung bildet.

Fig. 2 zeigt einen vergrößerten Abschnitt der Antenne 2. Man erkennt hier die einzelnen Filamente 3, die miteinander verflochtenen sind und relativ zueinander beweglich / verschiebbar ausgebildet sind.

Die Fig. 3 zeigt einen als Mikrochip ausgebildeten Elektronikschaltkreisen 4, an den zwei streifenförmige und in Form eines Verstärkungscords für Reifen ausgebildete Antennen 5 und 5' angeschlossen sind und der mit diesen eine als Transponder in einem Reifen ausgeführte Sende- und Empfangseinrichtung bildet.

Fig. 4 zeigt einen vergrößerten Abschnitt der Antenne 5. Man erkennt hier die einzelnen Filamente 6, die umeinander geschlagenen bzw. miteinander verdrillt und relativ zueinander beweglich / verschiebbar ausgebildet sind.

## Patentansprüche

1. Sende- und / oder Empfangseinrichtung zum Einbau in elastische Strukturen, vorzugsweise in polymere Strukturen, insbesondere Transponder zum Einbau in Reifen, wobei die Sende- und Empfangseinrichtung aus einem oder mehreren Elektronikschaltkreisen oder -elementen, beispielweise zusammengefasst in einem Mikrochip besteht, gegebenenfalls mit zugeordneten Sensor- und oder Signalelementen, wobei die Sende- und / oder Empfangseinrichtung eine oder mehrere an den Elektronikschaltkreis angeschlossene Antennen aufweist,
**dadurch gekennzeichnet,**
**daß** die Antenne aus einem oder mehreren elastisch und / oder plastisch verformbaren Filamenten besteht, die in der Fläche oder im Raum so angeordnet sind, dass die Hauptrichtungen der innerhalb der sie umgebenden elastischen Struktur / Matrix auftretenden Spannungen und Kräfte die Filamentachsen im Wesentlichen schneiden oder kreuzen.

2. Sende- und / oder Empfangseinrichtung nach Anspruch 1, **dadurch gekennzeichnet, daß** die Antenne aus einer Vielzahl miteinander verwobenen und / oder verflochtenen und elastisch oder plastisch verformbaren Filamenten besteht, wobei die einzelnen Filamentfäden relativ zueinander beweglich und / oder verschiebbar ausgebildet sind.

3. Sende- und / oder Empfangseinrichtung nach Anspruch 1, **dadurch gekennzeichnet, daß** die Antenne aus getwisteten, geschlagenen oder miteinander verdrehten und elastisch oder plastisch verformbaren Filamenten besteht, wobei die einzelnen Filamentfäden relativ zueinander bewegbar und / oder verschiebbar ausgebildet sind.

4. Sende- und / oder Empfangseinrichtung nach Anspruch 1, **dadurch gekennzeichnet, dass** die Antenne aus einem oder mehreren schraubenförmig oder wendelförmig / spiralförmig gedrehten Filament besteht.

5. Sende- und / oder Empfangseinrichtung nach Anspruch 2 oder 4, **dadurch gekennzeichnet, dass** die Filamente elektrisch leitend miteinander verbunden sind, vorzugsweise durch mechanischen Gleit-Kontakt.

6. Sende- und / oder Empfangseinrichtung nach einem oder mehreren der Ansprüche 1 bis 5, **dadurch gekennzeichnet, dass** die Filamente aus einem metallischen Werkstoff bestehen, vorzugsweise als dünne Drähte oder Folien ausgebildet sind.

7. Sende- und / oder Empfangseinrichtung nach Anspruch 6, **dadurch gekennzeichnet, dass** die Filamente aus Messing bestehen oder mit einer äußeren Messingschicht versehen sind.

8. Sende- und / oder Empfangseinrichtung nach einem oder mehreren der Ansprüche 1 bis 5, **dadurch gekennzeichnet, dass** die Filamente aus einem leitfähigen Werkstoff bestehen, vorzugsweise als dünne Drähte oder Folien aus Kohlenstoff enthaltenden Materialien ausgebildet sind.

9. Sende- und / oder Empfangseinrichtung nach einem oder mehreren der Ansprüche 1 bis 8, **dadurch gekennzeichnet, dass** die Sende- und / oder Empfangseinrichtung eine oder mehrere an den Elektronikschaltkreis angeschlossene Antennen aufweist, die über einer Zugentlastung miteinander oder mit dem Elektronikschaltkreis verbunden sind.

10. Sende- und / oder Empfangseinrichtung zum Einbau in elastische Strukturen vorzugsweise polymere Strukturen, insbesondere für Transponder zum Einbau in Reifen nach einem oder mehreren der Ansprüche 1 bis 9, **dadurch gekennzeichnet, dass** die Antenne in Form eines umlaufenden Bandes ausgebildet ist, dessen Enden mit dem Elektronikschaltkreis verbunden sind und einen geschlossenen Ring bilden.

11. Antenne für eine Sende- und / oder Empfangseinrichtung zum Einbau in elastische Strukturen, vorzugsweise polymere Strukturen, insbesondere für Transponder zum Einbau in Reifen nach einem oder mehreren der Ansprüche 1 bis 9, **dadurch gekennzeichnet, dass** die Antenne in Form eines flachen Bandes ausgebildet ist, welches aus miteinander verwobenen und / oder verflochtenen Filamenten besteht.

12. Antenne für eine Sende- und / oder Empfangseinrichtung zum Einbau in elastische Strukturen, vorzugsweise polymere Strukturen, insbesondere für Transponder zum Einbau in Reifen nach einem oder mehreren der Ansprüche 1 bis 9, **dadurch gekennzeichnet, dass** die Antenne in Form eines Schlauches ausgebildet ist, wobei die Wände des Schlauches aus miteinander verwobenen und / oder verflochtenen Filamenten bestehen.

13. Antenne für eine Sende- und / oder Empfangseinrichtung zum Einbau in elastische Strukturen, vorzugsweise polymere Strukturen, insbesondere für Transponder zum Einbau in Reifen nach einem oder mehreren der Ansprüche 1 bis 9, **dadurch gekennzeichnet, dass** die Antenne in Form eines Verstärkungscords für Reifen ausgebildet ist.
